# EUROPEAN PATENT APPLICATION

(11) **EP 1 927 947 A1**
(43) Date of publication of application: **04.06.2008**
(21) Application number: 07022951.3
(22) Date of filing: 27.11.2007
(51) Int. Cl.: G06T 1/00, G06T 7/20, G08B 13/196

(54) **Computer implemented method and system for tracking objects using surveillance database**

(30) Priority: 30.11.2006 US 565264
(71) Applicant: Mitsubishi Electric Corporation, Chiyoda-ku Tokyo 100-8310 (JP)
(72) Inventor: Ivanov, Yuri A., Arlington MA 02476 (US); Sorokin, Alexander, Champaign IL 61820 (US); Wren, Christopher R., Arlington MA (US)
(74) Representative: Pfenning, Meinig & Partner GbR

(57) **Abstract**

A method and system tracks objects using a surveillance database storing events acquired by a set of sensors and sequences of images acquired by a set of cameras. Sequences of temporally and spatially adjacent events sensed by the set of sensors are linked to form a set of tracklets and stored in the database. Each tracklet has endpoints being either a track-start, track-join, tracklet-merge or tracklet-end node. A subset of sensors is selected, and a subset of tracklets associated with the subset of sensors is identified. A single starting tracklet is selected. All sequences of tracklets temporally and spatially adjacent to the starting tracklet are aggregated to construct a tracklet graph. The track-join nodes and the track-split nodes are disambiguated and eliminated from the track graph to determine a track of the object in the environment.

## Description

### Field of the Invention

This invention relates generally to surveillance systems, and more particularly to surveillance systems and methods that include sensors and moveable cameras for tracking and identifying objects in an environment.

### Background of the Invention

Video cameras and relatively simple sensors make it possible to construct mixed modality surveillance systems for large environments. Although the sensors cannot identify objects, the sensors can detect objects in a relatively small area. The identification can be done from the images of videos acquired by the cameras when the images are available.

Storage for videos acquired by such systems can exceed many terabytes of data. Obviously, searching the stored data collected over many months for specific objects, in a matter of seconds, is practically impossible.

Therefore, it is desired to provide a system and method for tracking and identifying objects in stored video data.

### Summary of the Invention

In a conventional surveillance system, tracking of objects, such as people, animals and vehicles, is usually performed by means of image and video processing. The disadvantage of such a surveillance system is that when a specific object needs to be tracked and identified, the object needs to be observed by a camera. However, many surveillance environments require a large number of video cameras to provide the complete coverage necessary for accurate operation. A large number of video streams increase the computational burden on the surveillance system in order to operate accurately.

The embodiments of the invention provide a mixed modality surveillance system. The system includes a large number of relatively simple sensors and a relatively small number of movable cameras. This reduces cost, complexity, network bandwidth, storage, and processing time when compared with conventional surveillance systems.

Objects in an environment are tracked by the cameras using contextual information available from the sensors. The contextual information collected over many months can be searched to determine a track of a specific object in a matter of seconds. Corresponding images of the objects can then be used to identify the object. This is virtually impossible with conventional surveillance systems that need to search a huge amount of video data.

### Brief Description of the Drawings

Figure 1 is a diagram of environment in which the tracking system is implemented according to an embodiment of the invention;

Figure 2 is a diagram of a tracklet graph according to an embodiment of the invention;

Figure 3 is a block diagram of the environment of Figure 1 and a track of a tracked object according to an embodiment of the invention;

Figure 4 is a diagram of a decision graph according to an embodiment of the invention;

Figure 5 is an image of a user interface according to an embodiment of the invention;

Figure 6 is a flow diagram of a method for recording surveillance data according to an embodiment of the invention; and

Figure 7 is a flow diagram of a method for retrieving surveillance data to track objects according to an embodiment of the invention.

### Detailed Description of the Preferred Embodiments

**Surveillance System**

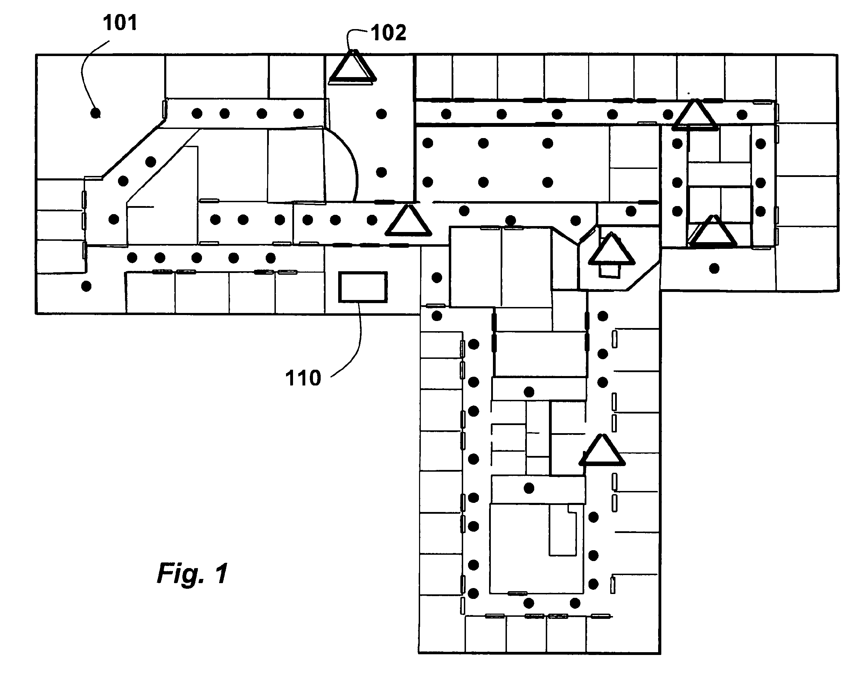

As shown in Figure 1, a surveillance system in which a tracking module is implemented according to the embodiments of our invention includes a relatively large set of wireless network of sensors (dots) 101 and relatively small set of pan-tilt-zoom (PTZ) cameras (triangles) 102. The ratio of sensors to cameras can be very large, e.g., 30:1, or larger.

**Sensors**

The sensors can be motion sensors, and door, elevator, heat, pressure and acoustic sensors. Motion sensors, such as infra-red sensors, can detect the movement of objects in a vicinity of the sensor. Door sensors can detect door opening and closing events, typically indicative of a person passing through the doorway. Elevator sensors can similarly indicate the arrival or departure of people in an environment. Acoustic sensors, e.g., transducers and microphones, can also detect activity in an area. Sensors can be mounted on light switches, or power switches of office equipment in the environment. Pressure sensors in mats can also indicate traffic passing by. Security sensors, such as badge readers at entryways into the environment can also be incorporated.

Each sensor is relatively small, e.g., 3 x 5 x 6 cm for a motion sensor. In a preferred embodiment, the sensors are densely arranged in public areas, spaced apart about every ten meters or less, and mounted on ceilings, wall, or floors. However, it should be noted that the spatial arrangement and density of the sensors can be adapted to suit a particular environment, and traffic flow in the environment. For example, high traffic areas have a denser population than low traffic areas.

In one embodiment of the invention, the set of sensors communicate with a processor 110, see Figure 1, using industry-standard IEEE 802.15.4 radio signals. This is the physical layer typically used by Zigbee type of devices. Each battery operated sensor consumes approximately 50 µA in detector mode, and 46 mA when communicating. A communication interval due to an activation is about 16 ms. It should be noted, the sensors can also be hard wired, or use other communication techniques.

When an event is detected by any of the sensors 101, a sensor identification (SID) and a time-stamp (TS) corresponding to the event is broadcast, or otherwise sent to the processor 110. The processor stores the sensor data as a surveillance database in a memory. The identification inherently indicates the location of the sensor, and therefore the location of the event that caused the activation. It only takes a small number of bytes to record an event. Therefore, the total amount of sensor data collected over a long period of operation is essentially negligible when compared with the video data.

The set of cameras are used to acquire video data (image sequences). The images have an inherent camera identification (CID or location) of the camera and frame number (FN). As used herein, the frame number is synonymous with time. That is, time can directly be computed from the frame number. Additionally, every time instant is associated with a set of pan-tilt-zoom parameters of each camera such that the visible portion of scenes in the vicinity of the sensors at any time instant can be calculated during a database query.

The cameras are typically ceiling mounted at strategic locations to provide maximum surveillance coverage, for example, at locations where all traffic in the environment must pass at some time. It is possible to orient and focus the PTZ cameras 102 in any general direction. Detection of an event can cause any nearby video cameras to be directed at the scene in the vicinity of the sensor to acquire video images, although this is not required. The ID and TS of the associated sensor(s) can later be used to retrieve a small sequence of images, i.e., a video clip related to the event. It should also be noted, that if no events are detected in the vicinity of a sensor near a particular camera, the acquisition of images can be suspended to reduce the amount of required storage.

It is a challenge to review video data acquired over many months of operation to locate specific events, tracks of specific objects, and to identify the objects.

**Tracklets and Tracklet Graph**

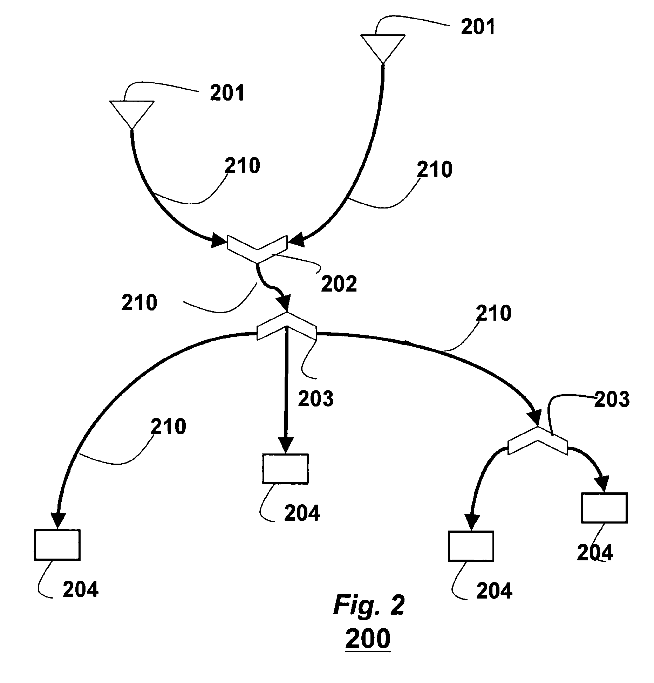

As shown in Figure 2, one embodiment of the invention uses a set of *tracklets* 210. A corresponding *tracklet graph* 200 is aggregated from the set of tracklets 210. A tracklet is formed by linking a sequence of temporally adjacent events at a sequence of spatially adjacent sensors 101. A tracklet is an elementary building block of a tracklet graph 210.

We will call the process of finding the immediate predecessor or successor event to a current event *linking.* The linking and storing of tracklets can be performed periodically to improve the performance of the system. For example, the linking and storing can be performed at the end of a working day, or every hour. Thus, when a search needs to be performed, the pre-stored tracklets are readily available.

In the constructed tracklet graph 200, the tracklets are the directed edges connected at nodes of the graph. The nodes of the graph encode the relation of each tracklet to its immediate successor or predecessor. The node can have one of four types: *Track-Start* 201, *Track-Join* 202, *Track-Split* 203 and *Track-End* 204.

**Track-Start**

The track-start node represents the first event in the tracklet such that no preceding events can be linked to the sensor within a predetermined time interval. As used herein, preceding means an earlier event at an adjacent sensor. The time interval can constrained approximately to the time it takes for a walking person to travel from one sensor to the next adjacent sensor.

**Track-Join**

The track-join node represents an event in the tracklet graph such that there exist multiple preceding events that can be linked to the sensor within the predetermined time interval. That is, the tracklet-join node represents a convergence of multiple preceding tracklets to a single successor tracklet. A single valid predecessor tracklet cannot exist as it would have already been linked into the current tracklet.

**Track-Split**

A track-split node represents an event in the tracklet such that there exist multiple successor tracklets that can be linked to the sensor within the predetermined time interval. That is, the tracklet-split node represents a divergence from a single preceding tracklet to multiple successor tracklets. A single valid successor tracklet cannot exist as it would have already been linked into the current tracklet.

**Track-End**

The track-end node represents the last event in the tracklet such that it cannot be linked to any subsequent events within the predetermined time interval. All tracklets form a set of graphs, each of which represents an inherent ambiguity about actual tracks traveled by objects.

The tracklet graph is the set of tracklets associated with events that can be aggregated according to the temporal and spatial constraint, which can be either imposed by the user, or 'learned' over time.

The tracklet graph in Figure 2 has two starting tracklets, which subsequently converge into a single track. The converged tracklet then splits twice resulting in four end points. The tracklet graph is the core representation of the events that we use for the purposes of object tracking.

**Extended Tracklet Graphs**

For the purposes of extended tracking in the instances, when an object disappears out of view of the sensor network, two spatially adjacent and temporally adjacent tracklet graphs can still be aggregated. This situation frequently occurs in an environment when tracked people exit public areas such as hall ways and enter areas such as offices. The event of entering the office terminates a predecessor tracklet at the tracklet-end node when the person is no longer sensed or observed. Upon leaving the office, the person can be tracked again in the successor graph. It is assumed that when a person enters an office, the person must eventually leave the office, even after an extended period of time, e.g., hours. In this case, the spatial restriction can be strictly enforced, while the temporal constraint can be relaxed.

The graphs can be aggregated under the condition that one of the track-end nodes of tracklets in the predecessor graph has timestamps that are less than the timestamp of at least one tracklet-start node of tracklets in the successor graph.

**Determining Sensor Visibility**

One goal of the invention is to determine when an area in the vicinity of a sensor is visible from any of the cameras. This minimizes the amount of irrelevant images that are presented to the user.

To achieve this goal, all cameras in the system are calibrated to the locations of the sensors. In our system, each sensor is associated with a range of pan, tilt and zoom parameters of each camera, that make events which caused the sensor activations be visible from that camera. If the PTZ parameters of each camera are stored in the surveillance database every time that the camera orientation changes, then when a tracklet is retrieved from the database for each sensor activation, the 'visibility' ranges can be compared with the PTZ parameters of each camera at the corresponding time. If the PTZ parameters of the camera fall within the visibility range of the sensor, then the sensor activation (event) is considered to be visible and the sequence of images from the corresponding camera is retrieved as video evidence. This evidence is subsequently displayed to the user during the tracklet selection process using a user interface as described below.

**Human-Guided Tracking**

The task of human-guided tracking and search that we solve with our system can be illustrated with a simple scenario.

A laptop was reported stolen from an office between 1:00 pm and 2:00 pm. There was no direct camera coverage available for the office. The user needs to find all people that could have passed by the office during that time, and possibly identify them and collect evidence connecting an individual with the event. In such a situation, the operator would want to identify all tracks that originated at the door of the office and to identify the individual by examining all available video evidence.

**General Principles of Object Tracking With Mixed-Modality Sensor Network**

Track-start and track-end nodes are unambiguous beginnings and ends of complete tracks. However, automatic resolution of track-splits and track-joins ambiguities is impossible using only sensed events. The ambiguities of splits and joins are due to the perceptual limitations of the sensor network to any features other than the events at or near the sensors.

In such situation, the event of two people crossing paths in the hallway causes the system to generate at least four tracklets containing events for each person before and after the possible crossover point. Without further information, there is an inherent ambiguity in the interpretation of this set of tracklets. For example, the two people can either pass each other, or meet and return the way they came. Mapping the identity to these tracks and maintaining their continuity with absolute certainty is impossible from just the events.

In the light of these ambiguities, we make the following simplifying observations:

The user does not need to disambiguate the entire graph. The user only needs to disambiguate track-join nodes starting the selected tracklet, or track-split nodes ending the selected tracklet for forward or backward graph traversal respectively.

Resolving track-joins and track-splits ambiguities can be simplified by considering video clips associated with each candidate track.

The first observation significantly reduces the amount of tracklets that need to be considered as possible candidates to be aggregated into the track. In one embodiment, the user tracks only one person at a time. Therefore, the system only needs to resolve the behavior of that person, while effectively ignoring other events. For the example of two people crossing paths, we assume one tracklet is selected before the cross-over, and therefore, only two tracklets need to be considered as a possible continuation and not all four. This iterative focused approach to tracking and track disambiguation allows us to reduce the complexity of the problem from potentially exponential to linear.

The second observation implies that when a split-join ambiguity occurs, the system can correlate the time and location of the tracklets with the video from the nearest cameras, and display the corresponding video clips to the user to make the decision about which tracklet is the plausible continuation for the aggregate track.

It may be possible to develop automated tracking procedures that attempt to estimate the dynamics of the motion of the objects using just the network of sensors. However, any such procedures will inevitably make mistakes. In surveillance applications, the commitment to results of even slightly inaccurate tracking process can be quite costly.

Therefore, our tracking method uses a human-guided technique with the tracklet graphs as the underlying contextual information representing the tracking data. It should be noted, that the sensor data on which the tracking and searching is based is very small, and can therefore proceed quickly, particularly when compared with conventional searches of video data.

The main focus of our system is to efficiently search a large amount of video data in a very short time using the events. To this end, we are primarily concerned with decreasing the false negative rate, with a false positive rate being a distant secondary goal. In order to achieve these goals, we adopt a mechanism for track aggregation as described below.

**Tracklet Aggregation**

The process of human-guided tracking of our system begins with selecting a subset of one or more sensors where we expect a track to begin, and optionally a time interval. For instance, in our system, where the sensors are placed in public areas outside of offices, the user can select the subset of sensors using a floor plan that can possibly be activated when the a person leaves a particular office.

By performing a fast search in the database of events, we can identify every instance of a tracklet that originated at one of the selected sensors. At this point, the user can select a single instance of the tracklet to explore in greater detail. By specifying an approximate time when the track begins, the above search can be expedited.

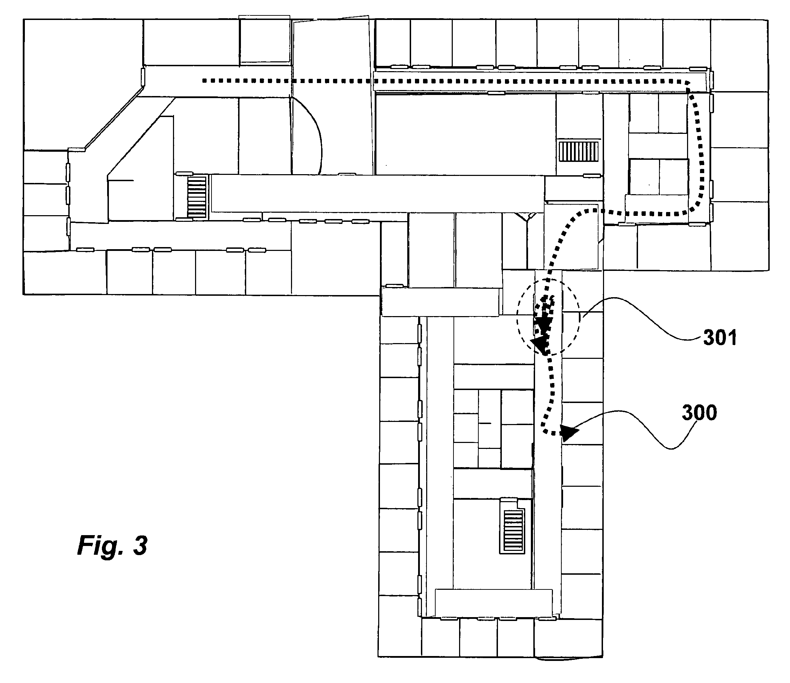

Upon selecting the first tracklet the corresponding tracklet graph is constructed. The aggregated track graph includes tracklets that are associated with temporally and spatially adjacent sequence of events. The selected tracklet is drawn on the floor plan up to the point where there is an end, a split or a node, as shown in Figure 3. When the endpoint is reached, the track 300 is complete. A location of a person along the track 300 in the floor plan is visually indicated in the user interface by a thickening 301 in the track 300.

If the end of the tracklet has a split or join node, then the track is not terminated, and the process of tracklet aggregation proceeds iteratively, using the tracklet graphs to aggregate the candidate tracklets into a coherent track. During this process, at each ambiguity in the graph (split or join nodes), the user selects the subgraph to traverse further. Available video images from cameras oriented towards any of the sensor activations belonging to the corresponding tracklet can be displayed to identify persons and select the correct successor tracklet. Automated techniques such as object and face recognition can also be used for the identification.

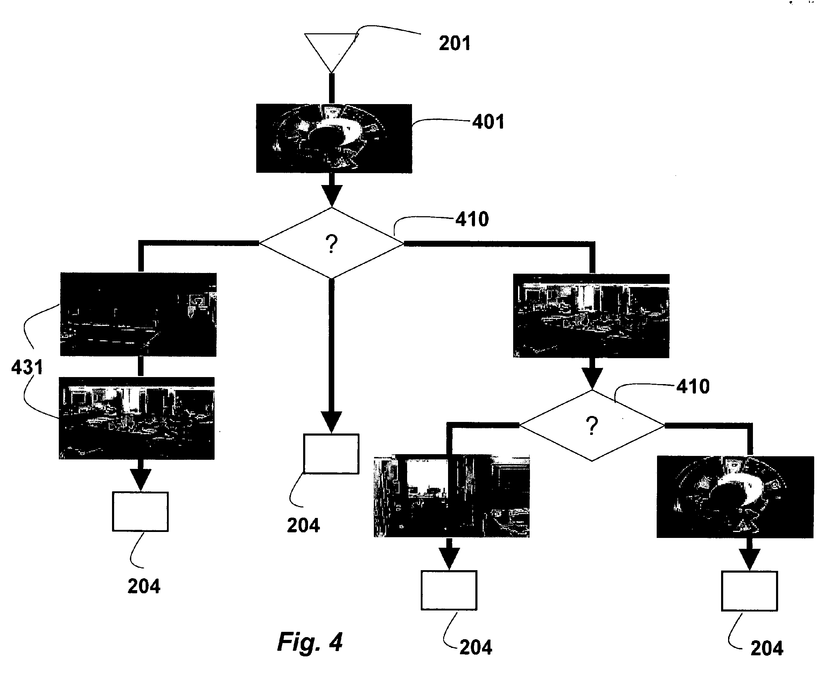

The process is shown in Figure 4 using a selection graph. In the selection graph, the video images 401 represent available video clips from cameras oriented towards sensors that are contained in the corresponding tracklets. The diamond 410 indicates an ambiguity, and possible conflicting tracklets following the ambiguity. Edges in the graph indicate that a tracklet exists.

Note that the tracklet selection graph in Fig 4 is related to the tracklet graph in Figure 2, but is not the same. In fact, the graph of Figure 4 represents a general selection graph, which can be used for traversal of the tracklet graph either forward in time (as shown) or backwards. In the former case, the start and end nodes of the selection graph in Figure 4 have the same meaning as those in the tracklet graph, while diamonds only represent splits. Track-joins are irrelevant to the forward selection process, as they present no forward selection alternative. In contrast, if the selection graph is used for backward traversal, then start and end nodes of the selection graph have the opposite meaning to those of the tracklet graph and diamonds only represent joins.

In either case, the tracklet selection graph represents a set of tracks through the tracklet graph that are possible to traverse beginning at the initially selected tracklet and the available camera frame 401 shown at the start node 201. Because the ambiguous points are known, at each such point the system can present the set of ambiguous tracklets to the user for disambiguation.

For example, at the first step, the ambiguous point 410 represents a three-way split from the current node. The left-most tracklet leads to two camera views 431. The middle tracklet terminates without having any camera views. The third tracklet has one camera view, and then leads to a two-way split. Each of these tracklets can be drawn on the floor plan. After the selection is made, the rejected tracklets are removed from the floor plan. The process continues until the end-track 204 is encountered.

When the end of a track is encountered, the process of track aggregation can terminate. However, if the user has a reason to believe that an actual track continues from the termination point, the tracklet graph extension mechanism as described above is used. The system performs a search in the database to find new tracklets that start at the location of the terminated track, within a predetermined time interval. If such tracklets are found, the corresponding video clips are identified and displayed to the user in the tracklet selection control panel as described below. When the users selects the initial track for the extended segment of the track, the tracklet is appended to the end of the aggregated track and a new tracklet graph is constructed that begins with the selected tracklet. Then, the selection process continues iteratively as described above to further extend the complete track of the object. In the complete track, all join and split nodes have been removed, and the track only includes a single starting tracklet and a single ending tracklet.

**User Interface**

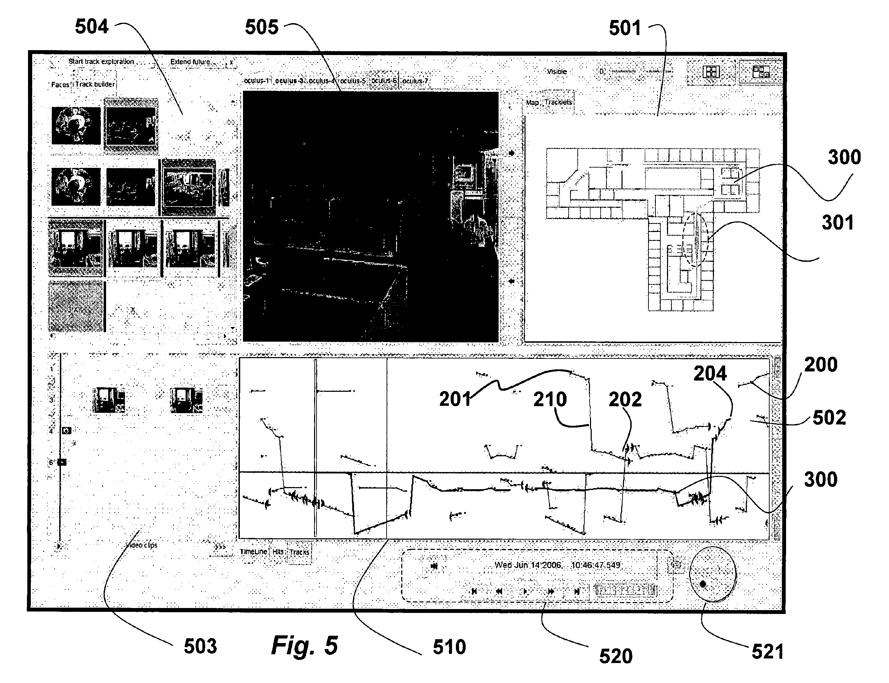

As shown in Figure 5, in one embodiment the user interface includes five main panels, a floor plan 501, a timeline, 502, a video clip bin 503, a tracklet selector 504, and a camera view panel 505.

The floor plan is as shown in Figure 3. A location of a person along the track 300 in the floor plan is indicated by a 'swell' 301 in the track 300. For each sensor, the time line 502 indicates events. Each row in the time line corresponds to one sensor, with time progressing from left to right. The vertical line 510 indicates the 'current' playback time. The menu and icons 520 can be used to set the current time. The 'knob' 521 can be used to adjust the speed of the playback. The time line can be moved forward and backwards by dragging the line with a mouse. The short line segments 200 represent tracklets, and the line 300 the resolved track, see Figure 3.

The video clip bin shows images of selected clips (image sequences) for object identification. In essence, the collected sequences of images associated with the track in the video clip bin are *video evidence* related to the track and object.

The tracklet selection control shows the current state of the decision graph of Figure 4.

Images corresponding to the current time and selected location are shown in the camera view panel 505. The images can be selected by the user, or automatically selected by a camera scheduling procedure. The scheduling procedure can be invoked during the playback of the clips to form the video clip bin 503.

**Tracking Method**

In the embodiment of this invention, the tracking process includes two phases: recording and retrieving surveillance data to track objects.

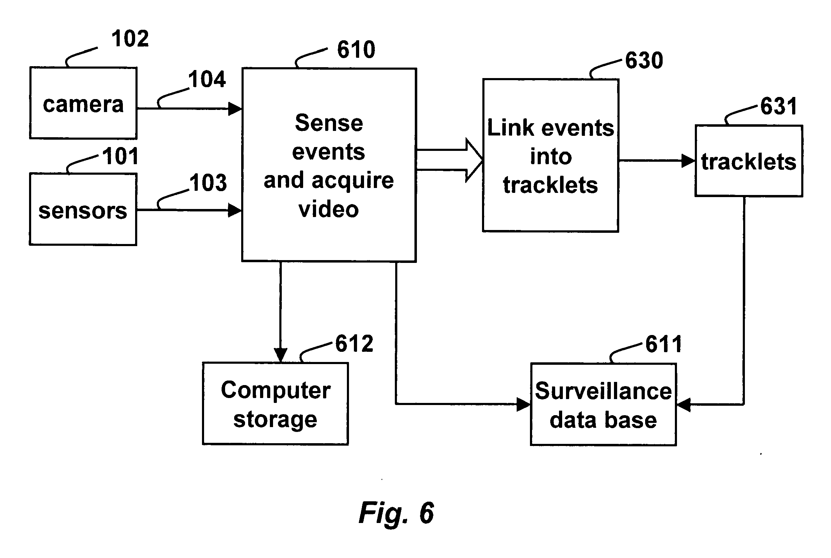

The recording phase is shown in Figure 6. Figure 6 shows a method that stores sensor data in a surveillance database 611. The surveillance database stores events 103 acquired by a set of sensors 101. Sequences of temporally and spatially adjacent events for the selected subset of sensors are linked 630 to form a set of tracklets 631. Each tracklet has a tracklet start node and a tracklet end node. The tracklets are also stored in the surveillance database.

Concurrently, with sensor activations, sequences of images 104 acquired by a set of cameras 102 are recorded on computer storage 612. Each event and image is associated with a camera (location) and time. Note, as stated above, the PTZ parameters of the cameras can also be determined.

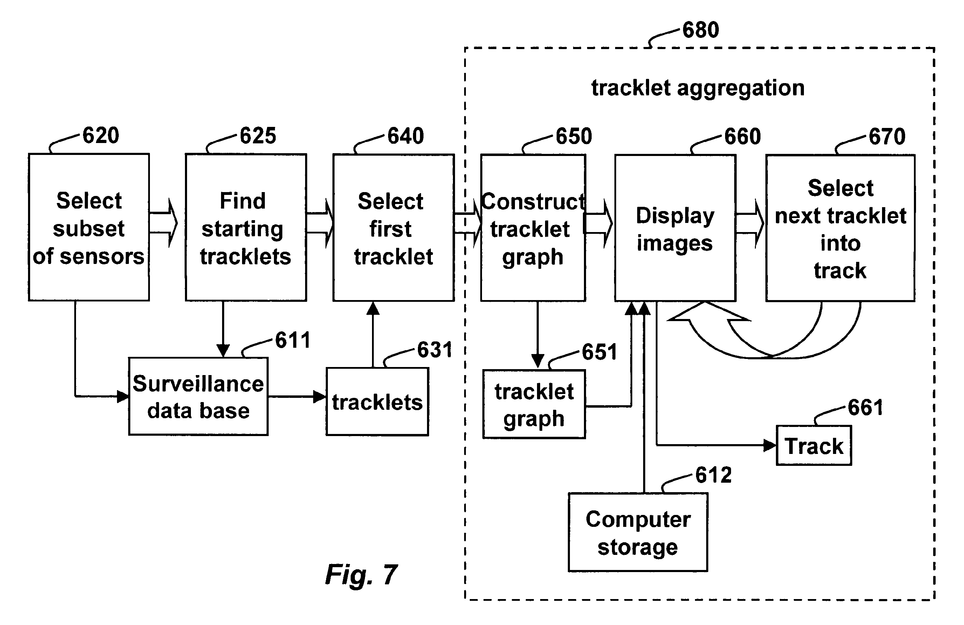

Tracking phase is shown in Figure 7. This phase includes selecting a subset of sensors 620 where a track is expected to originate, and finding 625 tracklets that can be used as starts of tracks, selecting 640 a first tracklet as a start of the track, and track aggregation 680.

Track aggregation starts with constructing 650 the tracklet graph 651 for the selected tracklet. The tracklet graph 651 has possible tracklet-join nodes where multiple preceding tracklets merge to a single successor tracklet, and possible tracklet-split nodes where a single preceding tracklet diverges to multiple tracklets.

The tracklet graph 651 is traversed iteratively starting from the initially selected tracklet. Following the graph, a next ambiguous node is identified, images correlated in time and space to the sensor activations (events) contained in candidate tracklets are retrieved from the computer storage 612 and displayed 660, and the next tracklet 670 to be joined with the aggregated track 661 is selected 670.

The process terminates when the aggregated track 661 is terminated with the tracklet having the track-end node as its end point, and all join and split nodes have been removed from the graph.

**Effect of the Invention**

The goal of the invention is to provide a system and method for tracking and identifying moving objects (people) using a mixed network of various sensors, cameras and a surveillance database.

A small number of PTZ cameras are arranged in an environment to be placed under surveillance. Even though the number of cameras is relatively small, the amount of video data can exceed many terabytes of storage.

The video cameras can only observe a part of the environment. This makes it difficult to perform object tracking and identification with just the cameras. Even if the camera coverage was complete, the time to search the video data would be impractical.

Therefore, the environment also includes a dense arrangement of sensors, which essentially cover all public areas. The events have an associated sensor identification and time. This makes total amount of sensor data quite small and easy to process. Activation events of the sensors, in terms of space and time, can be correlated to video images to track specific individuals, even though the individuals are not continuously seen by the cameras.

Although the invention has been described by way of examples of preferred embodiments, it is to be understood that various other adaptations and modifications can be made within the spirit and scope of the invention. Therefore, it is the object of the appended claims to cover all such variations and modifications as come within the true spirit and scope of the invention.

## Claims

1. A computer implemented method for tracking objects using a surveillance database, the surveillance database storing events acquired by a set of sensors and sequences of images acquired by a set of cameras, each event and image having an associated location and time, the method comprising the steps of:
linking sequences of temporally and spatially adj acent events sensed by the set of sensors to form a set of tracklets, each tracklet beginning with a track-start node, a track-join node or a tracklet-split node and ending with a track-end node, the tracklet-join node or the tracklet-split node, the tracklet-join nodes occurring where multiple preceding tracklets merge to a single successor tracklet and the track-split nodes occurring where a single preceding tracklet diverges to multiple successor tracklets;
selecting a subset of sensors;
identifying a subset of tracklets associated with the subset of sensors.
selecting a single tracklet from the subset of tracklet as a starting tracklet;
aggregating all tracklets temporally and spatially adjacent to the starting tracklet to construct a tracklet graph; and
disambiguating and eliminating the track-join nodes and the track-split nodes from the tracklet graph to determine a track of an object in the environment.

2. The method of claim 1, in which the disambiguating further comprising:
displaying available images temporally and spatially related to the events of the tracklet graph to identify the object.

3. The method of claim 1, in which the sensors are infra-red motion sensors, and the cameras are movable.

4. The method of claim 1, in which the sensors using wireless transmitters for transmitting the events.

5. The method of claim 1, further comprising:
retrieving the sequences of images only when events are detected by sensors in a view of a particular camera.

6. The method of claim 5, further comprising:
directing the particular camera at a general vicinity of the particular sensor when a particular event is sensed.

7. The method of claim 1, in which the aggregating is performed according to temporal and spatial constraints.

8. The method of claim 7, in which the temporal and spatial constraints are selected by a user.

9. The method of claim 7, in which the temporal and spatial constraints are learned over time.

10. The method of claim 1, further comprising:
drawing the track on a floor plan of the environment.

11. The method of claim 1, further comprising:
associating particular sequences of images with the tracklets.

12. The method of claim 11, further comprising:
collecting the particular sequences of images associated with the track as video evidence related to the track and object.

13. The method of claim 1, further comprising:
identifying sensors with cameras at any given time.

14. The method of claim 1, further comprising:
identifying particular events visible in the sequences of images at any given time.

15. The method of claim 14, further comprising:
reducing the video evidence to only images corresponding to visible sensor activations.

16. The method of claim 1, in which the linking step is performed periodically and the set of tracklets are pre-stored in the surveillance database.

17. A system for tracking objects using a surveillance database, the surveillance database storing events acquired by a set of sensors and sequences of images acquired by a set of cameras, each event and image having an associated location and time, the system comprising:
means for linking sequences of temporally and spatially adjacent events sensed by the set of sensors to form a set of tracklets, each tracklet beginning with a track-start node, a track-join node or a tracklet-split node and ending with a track-end node, the tracklet-join node or the tracklet-split node, the tracklet-join nodes occurring where multiple preceding tracklets merge to a single successor tracklet and the track-split nodes occurring where a single preceding tracklet diverges to multiple successor tracklets;
means for selecting a staring tracklet;
a user interface selecting a subset of sensors;
means for aggregating all tracklets temporally and spatially adjacent to the starting tracklet to construct a tracklet graph; and
means for disambiguating and eliminating the track-join nodes and the track-split nodes from the tracklet graph to determine a track of an object in the environment.

18. The system of claim 17, in which the disambiguating further comprises:
means for displaying available images temporally and spatially related to the events of the tracklet graph to identify the object.

19. The system of claim 18, in which the sensors are infra-red motion sensors, and the cameras are movable.
